# EUROPEAN PATENT SPECIFICATION

(11) **EP 4 253 841 B1**
(45) Date of publication and mention of the grant of the patent: **15.04.2026**
(21) Application number: 23156849.4
(22) Date of filing: 15.02.2023
(51) Int. Cl.: G01J 5/00, G01J 5/02, G01J 5/04, G01J 5/0801, G01J 3/02, G08B 17/12, G08B 29/14, F23N 5/08

(54) **MULTI-SPECTRUM MID-IR FLAME DETECTOR, USE OF A TEST LAMP AND METHOD OF TESTING**
MULTISPEKTRALER MITTELINFRAROT-FLAMMENDETEKTOR, VERWENDUNG EINER TESTLAMPE UND VERFAHREN ZUM TESTEN
DÉTECTEUR DE FLAMME À IR MOYEN À SPECTRES MULTIPLES, LAMPE D'ESSAI

(30) Priority: 31.03.2022 US 202263325702 P
(43) Date of publication of application: 04.10.2023
(73) Proprietor: Detector Electronics Buyer US, LLC, Bloomington, MN 55438 (US)
(72) Inventor: FILLMORE, Robert, Minneapolis, 55438 (US)
(74) Representative: Dehns

(56) References cited:
- US-B1- 9 459 142
- ANONYMOUS: "Model FL4000H Multi-Spectral Infrared Flame Detector", 1 July 2011 (2011-07-01), XP093075968, Retrieved from the Internet <URL:webarchive.generalmonitors.com/downloads/literature/flame/FL4000H_DATA.PDF> [retrieved on 20230824]
- ANONYMOUS: "Instructions Multispectrum IR Flame Detector X3302", 1 January 2019 (2019-01-01), XP093075924, Retrieved from the Internet <URL:https://www.manualslib.com/download/1859370/Det-Tronics-X3301.html> [retrieved on 20230823]
- ANONYMOUS: "MODEL TL105 Test Lamp For Flame Detection", 1 January 2018 (2018-01-01), XP093076148, Retrieved from the Internet <URL:https://www.manualslib.com/download/1663738/Msa-General-Monitors-Tl105.html> [retrieved on 20230824]

## Description

The subject matter disclosed herein generally relates to flame detectors, test lamps, and testing of flame detectors.

A flame detection system may be configured to sense or detect various attributes of a flame or an impending/burgeoning flame. Such flame detection systems may include an ultraviolet (UV) sensor that detects UV radiation emitted from a flame that is present within a field-of-view of sensors of the flame detection systems. Other sensors may use single spectrum mid-infrared (SSMIR) as the monitor radiation, in combination with UV monitoring and/or separate therefrom. In response to detection of a flame (e.g., detection of light at predetermined wavelengths, such as UV or Mid-IR), the flame detection systems are configured to output an alarm if such detection exceeds a predetermined threshold at the given wavelength(s).

Test lamps are used for field testing of such flame detection systems. Typically, these test lamps are handheld units that can be operated by a user to test operational functionality of the flame detection systems. The test lamps need only employ an emitter with ample emission in the wavelength(s) region(s) of interest that are detectable by the sensors of the flame detection systems (e.g., UV, SSMIR). Improved sensors may be arranged in the form of multi-spectrum mid-infrared (MSMIR). However, such MSMIR detectors require emission matching that of an actual flame (not just a single wavelength) with adequate amplitude. Currently, such test lamps are not feasible from a cost effective and/or implementation perspective. For example, the feasibility problem is a combination of matching spectral emission of an actual flame in combination with matching the intensity of such flame. A test lamp is designed to trigger a flame detector at the same distance as the limits for detecting flame by such detector. However, the combination of matching the spectral emission of the flame, mimicking other features of the flame (e.g., flicker characteristics), and the intensity of such flame (e.g., at an appropriate distance) make a "flame mimicking" test lamp unfeasible.

XP093075968 discloses a multi-spectral infrared flame detector employing IR detectors and artificial neural network-based signal processing. The IR detectors are configured for different wavelengths and characteristics. Testing of the flame detector can be initiated via test lamp which simulates a flame source.

According to a first aspect of the invention, a flame detector according to claim 1 is provided.

According to a second aspect of the invention, use of a test lamp for testing flame detectors according to claim 8 is provided.

According to a third aspect of the invention, a method for testing a flame detector according to claim 11 is provided.

Preferred and optional features will be apparent from the dependent claims.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter of the invention is particularly pointed out and distinctly claimed at the conclusion of the specification. The foregoing and other features, and advantages of the invention will become apparent from the following detailed description taken in conjunction with the accompanying drawings in which:
FIG. 1 is a schematic illustration of an exemplary flame detector;
FIG. 2 is a schematic illustration of an exemplary flame detector;
FIG. 3 is a schematic illustration of an exemplary test lamp;
FIG. 4A is a schematic diagram of a plan view of an exemplary monitored space;
FIG. 4B is a side elevation schematic diagram of the monitored space of FIG. 4A;
FIG. 5 is a flow process of an exemplary testing operation; and
FIG. 6 is a schematic plot illustrating an example of a trigger signal.

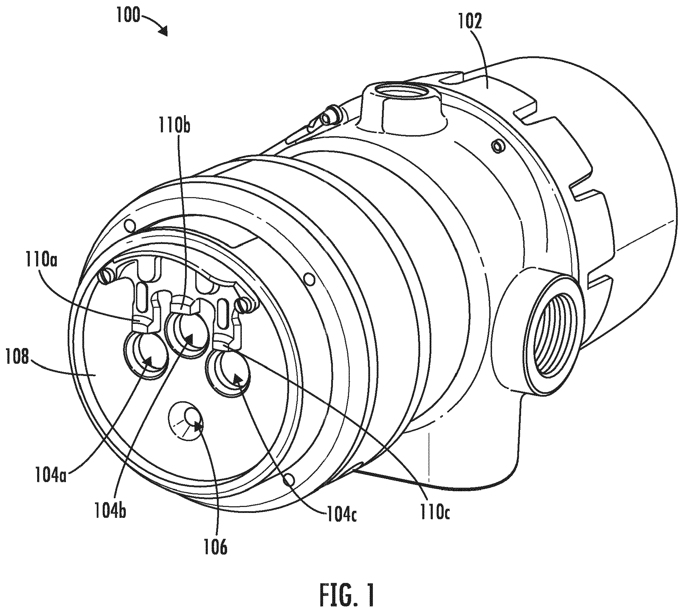

Referring to FIG. 1, a schematic illustration of a flame detector 100 is shown. The flame detector 100 may be configured to be installed in an indoor or outdoor location and arranged to monitor for flames within a monitored space. The flame detector 100 is configured to be fixedly mounted and installed in a location to have line of sight to some or all of a monitored space.

The flame detector 100 includes a body 102 housing various electronic components, including but not limited to, processors, memory, power sources and/or converters, optical detectors, optical emitters, and the like, as will be appreciated by those of skill in the art. As shown, the flame detector 100 includes a first optical window 104a, a second optical window 104b, and a third optical window 104c. Behind the optical windows 104a-c are arranged respective optical detectors configured to detect one or more predefined wavelengths of light. The optical windows 104a-c provide the flame detector 100 with the capability of a multi-spectrum infrared (IR) flame detection. The optical detectors and associated electronics can provide flame detection of fires from light to heavy hydrocarbon fuels, for example, combined with a high degree of false alarm rejection. Although FIG. 1 is illustrative of a three-sensor flame detector, those of skill in the art will appreciate that such flame detectors can include any number of sensors, such as one, two, three, four, five, etc. The number of sensors may be selected based on the desired wavelengths or other optical features desired to detect a flame or fire in a monitored space.

The flame detector 100 includes three IR sensors arranged behind the optical windows 104a-c, with each IR sensor having associated signal processing circuitry arranged within the housing 102. A standard output configuration of the flame detector includes fire, fault, and auxiliary relays. The flame detector 100, in this embodiment, also includes an indicator light 106, such as a tricolor LED. The optical windows 104a-c and the indicator light 106 are arranged on a faceplate 108 of the flame detector 100, with the faceplate 108 being fixedly attached to the body 102. The indicator light 106 may be configured to indicate conditions of the flame detector 100 (e.g., fire alarm, fault condition, power state, etc.). The internal electronics and/or sensors may be configured with microprocessor controlled heated components to resist moisture, ice, and/or other adverse environmental conditions.

The flame detector 100 may be configured to perform regular testing of the optical components thereof. An automatic optical integrity feature provides for a calibrated performance test that is automatically performed at regular intervals (e.g., once per minute) to verify complete detector operation capabilities. In such self-testing, no testing with an external test lamp is required. In some such embodiments, the flame detector 100 is configured to automatically perform the same test that a maintenance person with a test lamp would perform. Such automatic testing may be configured to not produce an alarm condition and thus avoid a response by emergency systems.

The self-testing operation includes reflectors 110a-c that are arranged relative to the respective optical windows 104a-c. Behind the optical windows 104a-c may be an optical source configured to direct light incident upon the reflectors 110a-c, and the reflected light is directed back into and through the optical windows 104a-c to be detected by respective detectors arranged behind the optical windows 104a-c. In addition to the automatic self-testing, the flame detector 100 may be configured with additional features, such as magnetic and/or manual testing features which can be incorporated into alarm actuation functionality to test and/or verify operation thereof, as will be appreciated by those of skill in the art. The flame detector 100 is configured to be in communication with one or more emergency systems such that upon detection of a flame (and not a fault), a fire suppression system may be activated and/or a notification can be generated and sent to an emergency monitoring system (e.g., a remote system and/or device).

As noted, the flame detector may be configured to perform self-testing during normal operation. Further, such flame detectors may be manually tested through use of a test lamp. A test lamp may be a handheld device that an operator can point at the flame detector and output specific or predetermined wavelengths of light. The flame detector will detect such light for purposes of testing and/or calibration. In a multi-spectrum flame detector, such as the flame detector 100 of FIG. 1, a test lamp having emissions matching that of an actual flame having a detectable level of amplitude at the same distance as the detector can respond to a fire is required. Currently, no cost-effective electronic emitter solution is available.

A Near IR (NIR) sensor is added to the multi-spectrum Mid-IR (MSMIR) flame detector for the purposes of receiving signal from a mid-IR emitter in a test lamp. The NIR sensor is mounted in such a fashion that the field of view of the NIR sensor matches that of the MSMIR flame detection sensors. When the NIR sensor receives an encoded NIR signal of adequate amplitude, such detection will activate an internal optical self-check of the flame detector that quantitatively tests each of the MSMIR sensors with an on-board emitter (e.g., using the reflectors 110a-c and associated emitters/detectors). This internal self-check may generate an alarm or indicator verifying proper operation of the flame detector. Such alarm or indicator is generated only when the self-check is successful. If no such alarm or indicator is generated, such lack can be indicative of a problem. Alternatively, an indicator or alarm may be generated for both a successful test and a failed test, thus informing a user of the status of the detector.

Accordingly, advantageously, the flame detector allows for use of a calibrated internal optical self-check of an MSMIR flame detector by optically triggering a self-check operation with an external NIR source from a test lamp. Because the NIR sensor is configured with a field of view matching the MSMIR flame detection sensors, the NIR sensor responds only to the NIR source if it is within the field of view of the MSMIR flame detection sensors. It is noted that the amplitude or intensity of the trigger signal may be selected to match a flame and thus enable verification that the covered area is within the field of view of the detector and within a maximum detection range of the flame detector. As such, a means of verifying the flame detector is aimed correctly and testing the status thereof may be achieved.

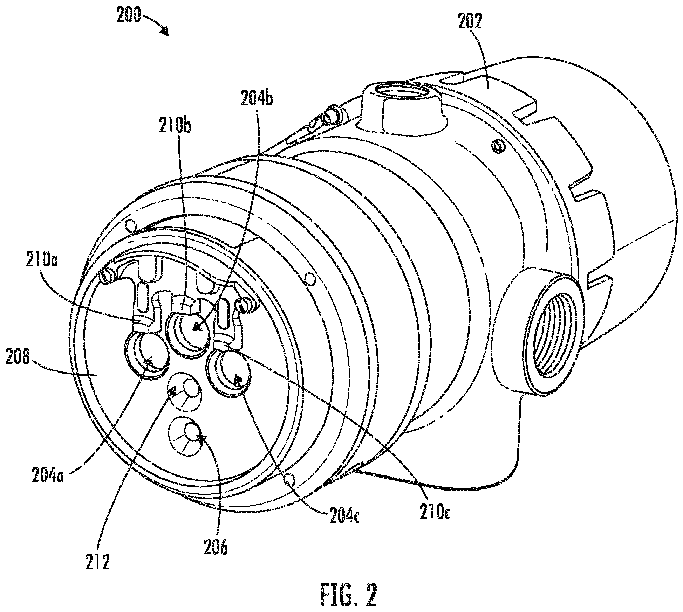

Referring to FIG. 2, a schematic illustration of a flame detector 200 is shown. The flame detector 200 may be substantially similar to that of the flame detector 100 shown in FIG. 1. The flame detector 200 includes a body 202 housing various electronic components, including but not limited to, processors, memory, power sources and/or converters, optical detectors, optical emitters, and the like, as will be appreciated by those of skill in the art. As shown, the flame detector 200 includes a first optical window 204a, a second optical window 204b, and a third optical window 204c. Behind the optical windows 204a-c are arranged respective optical detectors configured to detect one or more predefined wavelengths of light. The optical windows 204a-c provide the flame detector 200 with the capability of a multi-spectrum infrared (IR) flame detection. Although shown with three optical windows and described with three associated optical sensors, those of skill in the art will appreciate that flame detectors can include any number of optical sensors, such as one, two, three, four, etc. In some embodiments, the flame detection sensors may be ultraviolet sensors, infrared sensors, combination ultraviolet/infrared sensors, combinations of two separate such sensors, such as an infrared sensor arranged behind a first optical window and an ultraviolet sensor arranged behind a second optical window. As such, the illustrative embodiment is not intended to be limiting, but rather is provided for illustrative and explanatory purposes.

The flame detector 200 includes three IR sensors arranged behind the optical windows 204a-c, with each IR sensor having associated signal processing circuitry arranged within the housing 202. The flame detector 200, in this embodiment, also includes an indicator light 206, such as a tricolor LED. The optical windows 204a-c and the indicator light 206 are arranged on a faceplate 208 of the flame detector 200, with the faceplate 208 being fixedly attached to the body 202. Similar to that described above, the flame detector 200 may be configured to perform regular self-testing of the optical components thereof and/or manually/magnetically activated testing.

In this embodiment, the flame detector 200 includes a trigger sensor 212 that is configured to detect one or more predetermined and/or specific wavelength(s). Upon detection of such wavelength(s) at the trigger sensor 212, the trigger sensor 212 may cause the flame detector 200 to perform a self-test, similar to that described above. When the self-test is performed, in response to detection at the trigger sensor 212, the indicator 206 may display a light or similar indication that the test was successful.

Advantageously, the trigger sensor 212 may be configured with the same field-of-view as the detectors arranged behind the optical windows 204a-c. As such, when the trigger sensor 212 detects light of the appropriate wavelength and/or frequency, it can be determined that the detectors arranged behind the optical windows 204a-c have the same line-of-sight to detect a flame located at the source (i.e., at a test lamp). In accordance with some embodiments, the trigger sensor 212 may be a near-IR sensor that is mounted in such a fashion that the field of view of the trigger sensor 212 matches that of the MSMIR flame detection sensors. When the trigger sensor 212 receives an encoded NIR signal of adequate amplitude, the flame detector 200 will activate an internal optical self-check that quantitatively tests each of the flame detection sensors with an on-board emitter. When properly configured, this internal self-check generates an alarm verifying proper operation of the flame detector 200.

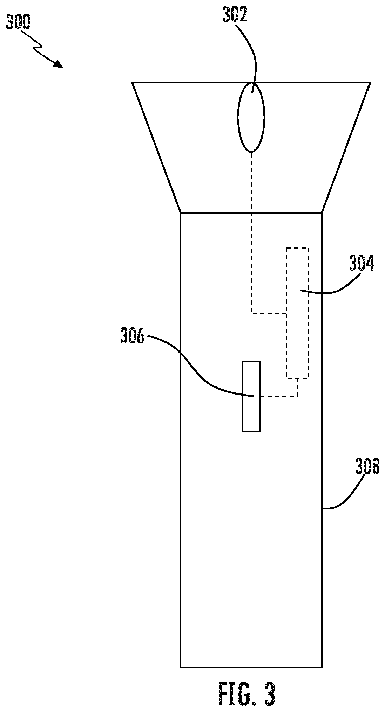

Turning now to FIG. 3, a schematic illustration of a test lamp 300 is shown. The test lamp 300 is a handheld device that an operator can use to project light at one or more predetermined wavelengths. The test lamp 300 includes a light source 302, a controller 304, and an actuator 306 arranged within a housing 308. The actuator 306 may be a switch or button that allows the operator to operate the test lamp 300. The actuator 306, schematically shown as a single element, may be formed from one or more buttons, switches, toggles, dials, or the like. For example, the actuator 306 may be configured to be operated to switch between two or more different wavelengths of emitted light, or the like. The controller 304 is configured to receive input commands from the actuator 306 and output control signals to the light source 302. The light source 302 will project or emit light at one or more predetermined wavelengths, which can be detected by a flame detection system or flame detector, such as described above.

The light source 302 may be an LED or the like that is configured to output one or more wavelengths of light that are selected to be similar to a natural flame. In other embodiments, in combination with specific flame-light wavelengths or alternative thereto, the light source 302 may be configured to output a trigger signal that can be detected by a flame detector to initiate a self-test or other predetermined operation at the flame detector (e.g., self-calibration, etc.). The trigger signal generated by the test lamp 300 may be a pulsed signal, a single emitted at one or more specific wavelengths, and/or a coded signal that is detectable by a trigger sensor of a flame detector. In some embodiments, the light source 302 may be configured to output a signal at a mid-IR wavelength, and thus the light source 302 may be a mid-IR emitter.

Upon detection of the trigger signal at the flame detector, the flame detector is configured to perform one or more specific actions, such as self-testing, self-calibration, etc. In contrast to conventional test lamps that output one or more wavelengths that mimic a natural flame, the test signal is not be designed to entirely mimic a natural flame, but rather is a signal specifically designed to trigger an action at a flame detector that receives the trigger signal. The intensity of the trigger signal may be selected to mimic the intensity of a natural flame so that the test lamp outputs the trigger signal at an intensity that matches the sensitivity of the flame detection sensors of the flame detector. As such, the test lamp and trigger signal thereof are selected to mimic the presence of a natural flame at a specific location, but not the wavelengths of light of a natural flame. The trigger signal does not mimic one or more properties of a natural flame. The trigger signal may be output at an intensity which initiates a response from the trigger sensor so that the magnitude required by the trigger sensor is achieved when the test source is at, or closer than, the maximum fire detection range of the flame sensor. As such, a pure mimic of a flame is not necessary. Rather, the test lamp may be configured to generate a signal of appropriate intensity to be detected and received at a flame detector to trigger a response by the flame detector.

The specific configuration of the trigger signal may depend upon the emitter (test lamp) and sensor (flame detector) selected. It will be appreciated that the critical requirement is for the signal to not match naturally occurring phenomenon, and thus avoid false activation of the test operation. For example, assuming the emitter and the trigger sensor can pulse at high frequency and detect the high frequency pulse, respectively, an example trigger signal is a sequence of very short pulses with very short intervals between such pulses, with the frequency and spacing known values. In some such embodiments, the interval between pulses may be defined and can vary in a predefined manner, thus making a unique (non-natural) trigger signal. In other configurations, a simple pulsed code that includes long and short pulses of a repetitive nature may be employed. In some embodiments, a repeating sequence can reduce the likelihood of anything other than the test source (test lamp) triggering the self-test at the flame detector. In some embodiments, the trigger signal may be transmitted over a relatively short time interval (e.g., on the order of 1 second, 2 seconds, etc.) so that the test lamp does not have to engage the trigger sensor too long. It will be appreciated that the trigger signals can take any number of forms including specific wavelengths, frequencies, pulse patterns, varying intensity pulses, etc. and combinations thereof. For example, and without limitation, the trigger signal may be transmitted in visible wavelengths, near-IR, or other specific wavelength, range of wavelengths, or combinations of different specific individual or groups of wavelengths. Further, the trigger signal may be a patterned signal or pulse sequence. The trigger signal can be a pattern that itself is recognizable in itself. In other configurations, the trigger signal may be a transmission of data. In some embodiments, the trigger signal may be a directional signal that is configured to avoids reflections triggering a test operation at a flame detector. In some embodiments, a pulsed sequence that includes one or more of varying length, time, frequency, amplitude o the like. The varying amplitude may be set to remain about a minimum amplitude for detection of the range and field of view of the flame detector. In some embodiments, a modulated signal (e.g., modulated in time, frequency, or amplitude) may be employed.

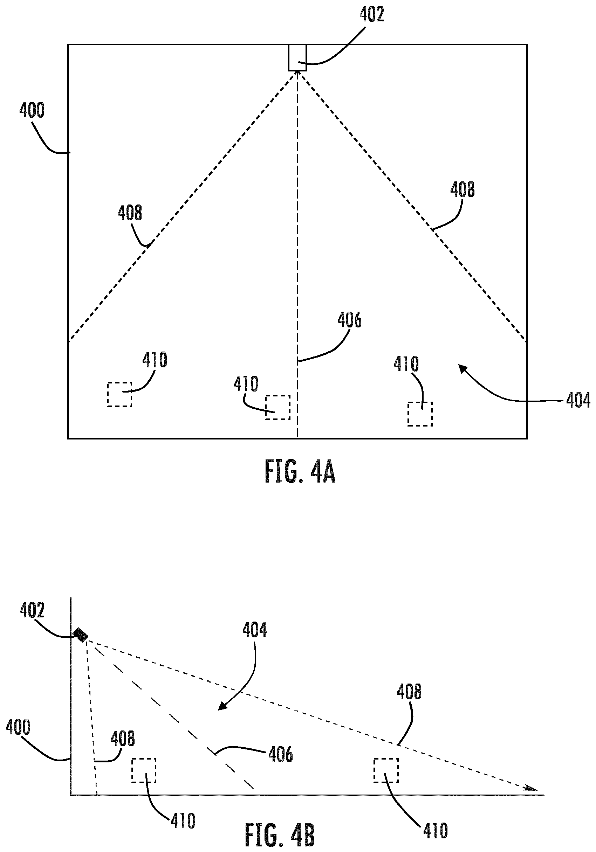

Turning now to FIGS. 4A-4B, schematic illustrations of a monitored space 400 having a flame detection system 402 installed therein are shown. The monitored space 400 may be an indoor or outdoor space with the flame detection system 402 arranged to monitor for the presence of flames within a detection zone 404. The flame detection system 402 may include a flame detector similar to that shown and described above. The flame detection system 402 may be configured as a multi-spectrum mid-infrared (MSMIR) detector, having multiple IR sensors arranged therein. Further, the flame detection system 402 may include a trigger sensor and indicator, as described above.

The flame detection system 402 has a center axis of detection 406 and a field-of-view 408 that defines the bounds of the detection zone 404. The flame detection system 402 has a detection range being defined as a maximum line-of-sight direct line distance from the flame detection system 402 to a location where a flame may be detected by the flame detection system 402. In some configurations, the detection range may be greater than the maximum defined by the monitored space 400 (e.g., detection range may be greater than an opposing wall or other line-of-sight obstruction).

In this illustration, a test lamp 410 is shown at various locations throughout the detection zone 404. The test lamp 410 may be configured similar to that described above with respect to FIG. 3. At each location of the test lamp 410, the test lamp 410 may project or transmit a trigger signal from the test lamp 410 to the flame detection system 402. The trigger signal may be an encoded signal that is transmitted in near-IR wavelengths. When a trigger sensor of the flame detection system 402 detects the trigger signal, the flame detection system 402 will initiate a self-test, similar to that described above. In the self-test, internal sources will emit light at predetermined wavelengths that will reflect from an external reflector (e.g., on a face plate of the system) and be reflected back toward the flame sensors of the flame detection system 402. Upon successful testing, the flame detection system 402 will indicate a success through an indicator on the flame detection system 402 (e.g., indicator 206 of the flame detector 200 shown in FIG. 2).

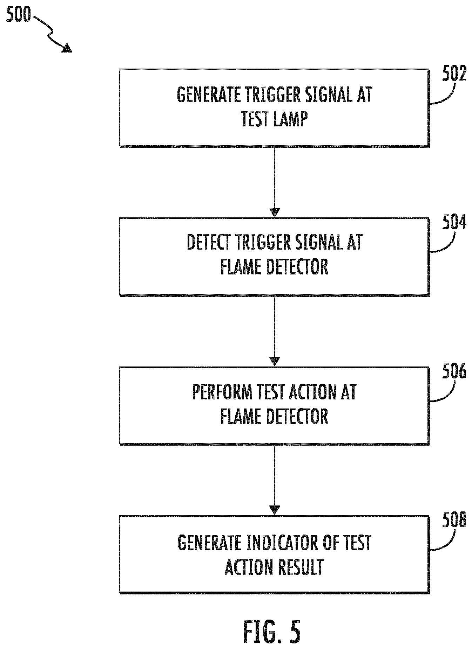

Turning now to FIG. 5, a test lamp operation 500 is shown. The test lamp operation 500 is configured to be performed using a test lamp (e.g., test lamp 300 of FIG. 3) with a flame detector (e.g., flame detector 200 of FIG. 2). It will be appreciated that the test lamp and the flame detector of test lamp operation 500 may be performed using devices that are different from that shown and described above.

At block 502, a test lamp is used to generate a trigger signal. The test lamp may be carried by an operator and used as a handheld unit. During the test lamp operation 500, the operator may move about a monitored space and point the test lamp toward a flame detector to be tested. As such, the operator may be able to test the range and sensitivity of the flame detector in multiple locations of a monitored space. Further, through this generation of the trigger signal, an operator can determine if the flame detector has both line of sight to the location of the test lamp and sufficient sensitivity to detect a flame at the location of the test lamp. To achieve this, the test lamp is configured to output one or more wavelengths of light of a predetermined intensity that may be analogous to a flame or otherwise detectable by a flame detector trigger sensor (e.g., of sufficient intensity to be detected within a detection range of the trigger sensor/flame detection sensors). It will be appreciated that the wavelength(s) of the trigger signal may not be identical to a flame and/or intended to mimic a flame. Rather, the trigger signal is configured to be detected not by the optical detectors of a flame detector but rather by a trigger sensor of the flame detector.

The trigger signal generated by the test lamp may be a pulsed signal, a coded signal, a projection of a specific wavelength of light, or the like, and/or combinations thereof. In some embodiments, the trigger signal is set to be projected at an intensity that matches a flame, although the trigger signal itself may not be representative of flame-like wavelengths. In other embodiments, the trigger signal may not be configured to mimic a flame, but rather may be a signal that is specifically designed and configured to be detected by the trigger sensor of a flame detector. That is, there is no requirement that the detected trigger signal be based on natural flames, as the purpose of such signal is to activate an internal operation at the flame detector, as described herein.

At block 504, a trigger sensor of the flame detector is configured to detect the trigger signal. It is noted that if the flame detector does not detect the trigger signal, then this is indicative of lack of line of sight, beyond a flame detection range, lack of sensitivity of the trigger sensor, or other issue (e.g., power and/or electronics failure, faulty components, etc.).

At block 506, upon detection of the trigger signal at the trigger sensor of the flame detector, the flame detector is configured to perform a test action. The test action may be a self-test, a self-diagnostic, a self-calibration, or the like. That is, the detection of the trigger signal initiates an internal operation of the flame detector. During this step, the flame detector will perform the test action. For example, the test action may cause the flame detector to generator specific wavelength(s) light that is reflected toward one or more flame detection sensors of the flame detector, with such wavelength(s) being selected to mimic flame-like wavelengths. Such testing ensures that the optical windows of the flame detector are not negatively impacted (e.g., film coating, cracks, obstructions, dust, etc.). Although the trigger signal is not indicative of a flame at the location of the test lamp, because the test lamp is configured to output a specific intensity signal, the trigger signal is indicative of the ability of the flame detector to observe a flame at the location of the test lamp.

At block 508, upon completion of the test action, the flame detector will generate an indicator regarding the results of the test action. For example, the flame detector may generate a predetermined indication signal, such as an indicator light that generates a specific color indicative of the test results (e.g., green for success, yellow for potential errors, and red for failed test). If the indicator does not provide any response, this itself is indicative of an issue, such as lack of line of sight, out of detection range, power failure, component failure, or the like.

Because the test lamp is configured to generate the trigger signal rather than directly mimic a flame, the linear distance between the test lamp and the flame detector may be greater than a conventional test lamp that mimic a flame. That is, because the trigger signal is a specific tailored signal, there is no requirement to have a test lamp with complex electronics necessary to generate a "mimic" signal of a natural flame. Moreover, due to the signal trigger signal, the complexity of the test lamp itself may be reduced. That is, the test lamp that generates only a trigger signal need not be configured to generate multiple different wavelengths of light that match a natural flame, particularly for multi-spectrum mid-infrared (MSMIR) flame detectors. Through the use of such a trigger signal, as described herein, the detection range of the test lamp may be greatly increased as compared to conventional test lamps. For example, a test lamp that mimics a natural flame in spectra and intensity may only be detectable at ranges of about 15 feet or less, due to, in part, limitations on mimicking the intensity of the natural flame. However, by using the trigger signals described herein, the special purpose trigger signal may be output from a test lamp at a much higher intensity of prior test lamps, enabling a much greater range of detection by a flame detector trigger sensor (e.g., greater than 15 feet, 20 feet, 50 feet, even hundreds of feet).

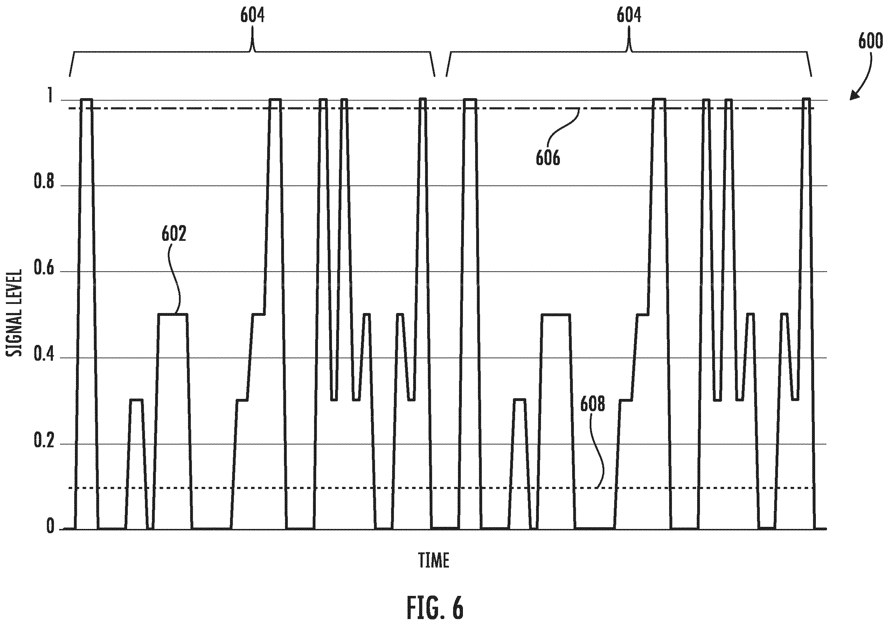

Turning now to FIG. 6, a plot 600 representative of an example trigger signal 602 is shown. The plot 600 is a signal level versus time plot. As such, the horizontal axis represents increasing time, and the vertical axis represents signal level. In this example embodiment of a trigger signal, the trigger signal 602 is a pulsed signal of varying intensity. The trigger signal 602 is a repeating pattern, with two pulse sequences 604 illustratively shown. The trigger signal 602 has variable "on" and "off" times, with the "on" states having varying intensity. As a result, a trigger signal may have varying time and amplitude, in a unique pattern that is detectable by a trigger sensor of a flame detector, such as shown and described above. In plot 600, line 606 represents the signal level from the test source (test lamp) received by the trigger sensor of the flame detector, with line 606 corresponding to the flame detection limit of the flame detector. Line 608 of plot 600 represents the signal level from the test source (test lamp) received by the trigger sensor of the flame detector corresponding to the lowest level detectable by the trigger sensor. This unique and repeating pattern of pulses, of varying time and signal strength allows for unique detection by the trigger sensor of the flame detector.

During the transmission of the trigger signal 602 from a test lamp, it is desirable to ensure that the signal strength of the trigger signal 602 contains at least a portion of the signal at a level that represents the detection limit of the flame detector. This is illustratively shown as line 606 in plot 600. By setting a signal strength of the test lamp to be equal to or greater than the limit of the flame detector, a user can know with certainty that the flame detector can detect a flame at the location of the test lamp. Moreover, the signal strength of the pulses must be greater than a minimum or lowest level detectable by the flame detector. This is illustratively shown as line 608 in plot 600. If the trigger signal 602 does not exceed the minimum limit, then the flame detector will not detect the trigger signal and thus will not initiate the self-test operation.

In some embodiments, the pulsed or variable signal itself may be detectable by a trigger sensor of a flame detector. However, in other configurations, a coded or encoded signal having data may be employed. Such data can be used to cause the self-test activation within a flame detector that receives the coded or encoded signal.

Advantageously, embodiments described herein provide test lamps and flame detectors with improved testing capability. In some embodiments, the flame detectors may be multi-spectrum mid-infrared (MSMIR) detectors having a trigger sensor configured to detect a trigger signal. The trigger signal is generated at a test lamp that can be operated by an operator within a monitored space. The method allows for use of a calibrated internal optical self-check of an MSMIR flame detector by optically triggering a self-check with an external NIR source from a test lamp. Because the trigger sensor of the flame detector has a field of view matching the field of view of the flame detection sensors, the trigger sensor responds only to the test lamp trigger signal if the signal is emitted within the field of view and detection range of the flame detection sensors. This provides a means of verifying the flame detector is aimed correctly and testing thereof may be achieved at a reasonable cost.

The goal of a test lamp for flame detectors is to determine two pieces of information. First, is to ensure that the desired range and field of view of the flame sensor are correct to monitor a space or location. The second is to perform a self-test of the flame detector to ensure that it is operating correctly. Typically, using conventional test lamps, both pieces of information are performed by the test lamp. That is, the test lamp is positioned in a location where a flame should be detected, and then a flame-mimicking light is projected from the test lamp to the flame detector where a self-check is performed based on the light from the test lamp. However, advantageously, the only aspect performed by the test lamps is the distance range and field of view, while the testing operation is performed internally by the flame detector. As such, advantageously, the method avoids a single source to do both range/field of view and test operation of the flame detector. Accordingly, the test lamp may be customized, as described above, for this specific purpose, enabling a much greater range of use as compared to conventional test lamps.

The use of the terms "a", "an", "the", and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. As used herein, the terms "about" and "substantially" are intended to include the degree of error associated with measurement of the particular quantity based upon the equipment available at the time of filing the application. For example, the terms may include a range of ± 8%, or 5%, or 2% of a given value or other percentage change as will be appreciated by those of skill in the art for the particular measurement and/or dimensions referred to herein.

While the present invention has been described in detail in connection with only a limited number of embodiments, it should be readily understood that the present invention is not limited to such disclosed embodiments. Rather, the disclosed embodiments can be modified to incorporate any number of variations, alterations, substitutions, combinations, or sub-combinations not heretofore described, but which are commensurate with the scope of the present invention, as defined by the appended claims. Additionally, while various embodiments of the present invention have been described, it is to be understood that aspects of the present invention may include only some of the described embodiments.

Accordingly, the present invention is not to be seen as limited by the foregoing description but is only limited by the scope of the appended claims.

## Claims

1. A flame detector (200), comprising:
a body (202);
a face plate (208) mounted to the body;
at least one flame detection sensor arranged within the body, with each flame detection sensor of the at least one flame detection sensor being arranged behind a respective optical window (204) in the face plate;
a trigger sensor (212) within the body configured to detect a trigger signal received from an external source, wherein the trigger sensor has a field-of-view and sensitivity that is the same as a field-of-view and sensitivity of the at least one flame detection sensors; and
a controller operably connected to the trigger sensor, wherein the controller is configured to perform a self-test operation of the flame detector when a trigger signal is received at the trigger sensor;
**characterized in that**
the at least one flame detection sensor is configured as a multi-spectrum mid-infrared (MSMIR) sensor assembly; and
a reflector (110a-c) is arranged on the face plate for each flame detection sensor of the at least one flame detection sensor, wherein each reflector is arranged to reflect a light received from an emitter arranged within the body and direct the received light to a respective flame detection sensor of the at least one flame detection sensor;
wherein the controller is configured to cause the flame detector to:
receive, at a trigger sensor (212) of the flame detector, a coded trigger signal from a test lamp (300);
perform a self-test operation of the flame detector in response to detection of the coded trigger signal;
wherein the self-test operation comprises: emitting light of a predetermined wavelength from within the flame detector toward a reflector; and
detecting light of the predetermined wavelength reflected from the reflector at a flame detector sensor of the flame detector.

2. The flame detector (200) of claim 1, wherein the multi-spectrum mid-infrared (MSMIR) sensor assembly comprises at least three flame detection sensors.

3. The flame detector (200) of any preceding claim, wherein the at least one flame detection sensor is configured to detect wavelengths of light indicative of a natural flame.

4. The flame detector (200) of any preceding claim, further comprising an indicator light arranged on the face plate (208) and configured to generate an indication of a status of the flame detector.

5. The flame detector (200) of any preceding claim, wherein the at least one flame detection sensor comprises a multi-sensor flame detector.

6. The flame detector (200) of any preceding claim, wherein the at least one flame detection sensor comprises an ultraviolet sensor.

7. The flame detector (200) of any of claims 1 to 5, wherein the at least one flame detection sensor comprises an ultraviolet/infrared sensor.

8. Use of a test lamp (300) for testing a flame detector (200) according to any of claims 1 to 7, the test lamp comprising:
a housing (308);
a light source (302) configured to emit light; and
a controller (304) configured to control the light source to generate and output a trigger signal, wherein the trigger signal is configured to cause the flame detector (200) to perform a self-test operation and wherein the trigger signal is configured not to mimic one or more properties of a natural flame.

9. Use of a test lamp (300) as defined in claim 8, the test lamp further comprising an actuator (306) operably coupled to the controller, wherein the actuator is configured to initiate generation and output of the trigger signal.

10. Use of a test lamp (300) as defined in any of claims 8-9, wherein the trigger signal is at least one of a coded signal, a signal transmitted at a predetermined wavelength, and a pulsed signal.

11. A method for testing a flame detector (200) according to any of claims 1 to 7, the method comprising:
receiving, at a trigger sensor (212) of the flame detector, a coded trigger signal from a test lamp (300);
performing a self-test operation of the flame detector in response to detection of the coded trigger signal
wherein the self-test operation comprises:
emitting light of a predetermined wavelength from within the flame detector toward a reflector; and
detecting light of the predetermined wavelength reflected from the reflector at a flame detector sensor of the flame detector.

12. The method of claim 11, further comprising generating an indicator regarding a status of the self-test operation.

13. The method of claim 11 or 12, wherein the indicator comprises a light (106) on the flame detector.

14. The method of any of claims 11 to 13, further comprising:
emitting the trigger signal from a test lamp (300) and directing said trigger signal toward the flame detector.

15. The method of any of claims 11 to 14, wherein the trigger sensor has a field-of-view and sensitivity that is the same as a field-of-view and sensitivity of the at least one flame detection sensor.

## Patentansprüche

1. Flammendetektor (200), umfassend:
einen Körper (202);
eine Frontplatte (208), die an den Körper montiert ist;
mindestens einen innerhalb des Körpers angeordneten Flammendetektionssensor, wobei jeder Flammendetektionssensor des mindestens einen Flammendetektionssensors hinter einem jeweiligen optischen Fenster (204) in der Frontplatte angeordnet ist;
einen Trigger-Sensor (212) innerhalb des Körpers, der ausgebildet ist, ein von einer externen Quelle empfangenes Triggersignal zu detektieren, wobei der Trigger-Sensor ein Sichtfeld und eine Empfindlichkeit aufweist, die mit einem Sichtfeld und einer Empfindlichkeit des mindestens einen Flammendetektionssensors gleich sind; und
eine Steuereinheit, die betriebsfähig mit dem Trigger-Sensor verbunden ist, wobei die Steuereinheit ausgebildet ist, einen Selbsttestvorgang des Flammendetektors auszuführen, wenn ein Triggersignal am Trigger-Sensor empfangen wird;
**dadurch gekennzeichnet ist, dass**
der mindestens eine Flammendetektionssensor als multispektrale Mittelinfrarot-(MSMIR)-Sensoranordnung ausgebildet ist; und
ein Reflektor (110a-c) auf der Frontplatte für jeden Flammendetektionssensor des mindestens einen Flammendetektionssensors angeordnet ist, wobei jeder Reflektor dazu angeordnet ist, ein von einem innerhalb des Körpers angeordneten Emitter empfangenes Licht zu reflektieren und das empfangene Licht zu einem jeweiligen Flammendetektionssensor des mindestens einen Flammendetektionssensors zu lenken;
wobei die Steuereinheit ausgebildet ist, den Flammendetektor zu veranlassen:
ein codiertes Triggersignal von einer Testlampe (300) an einem Trigger-Sensor (212) des Flammendetektors zu empfangen;
einen Selbsttestvorgang des Flammendetektors als Reaktion auf die Detektion des codierten Triggersignals auszuführen;
wobei der Selbsttestvorgang umfasst: Licht einer vorbestimmten Wellenlänge aus dem Inneren des Flammendetektors in Richtung auf einen Reflektor auszustrahlen; und
Licht der vorbestimmten Wellenlänge, das von dem Reflektor reflektiert wird, an einem Flammendetektionssensor des Flammendetektors zu detektieren.

2. Flammendetektor (200) nach Anspruch 1, wobei die multispektrale Mittelinfrarot-(MSMIR)-Sensoranordnung mindestens drei Flammendetektionssensoren umfasst.

3. Flammendetektor (200) nach einem vorstehenden Anspruch, wobei der mindestens eine Flammendetektionssensor ausgebildet ist, Wellenlängen von Licht zu detektieren, die auf eine natürliche Flamme hinweisen.

4. Flammendetektor (200) nach einem vorstehenden Anspruch, der weiter eine auf der Frontplatte (208) angeordnete Anzeigeleuchte umfasst, die ausgebildet ist, eine Anzeige eines Status des Flammendetektors zu erzeugen.

5. Flammendetektor (200) nach einem vorstehenden Anspruch, wobei der mindestens eine Flammendetektionssensor einen Mehrsensor-Flammendetektor umfasst.

6. Flammendetektor (200) nach einem vorstehenden Anspruch, wobei der mindestens eine Flammendetektionssensor einen Ultraviolettsensor umfasst.

7. Flammendetektor (200) nach einem der Ansprüche 1 bis 5, wobei der mindestens eine Flammendetektionssensor einen Ultraviolett/Infrarot-Sensor umfasst.

8. Verwendung einer Testlampe (300) zum Testen eines Flammendetektors (200) nach einem der Ansprüche 1 bis 7, wobei die Testlampe umfasst:
ein Gehäuse (308);
eine Lichtquelle (302), die ausgebildet ist, Licht auszustrahlen; und
eine Steuereinheit (304), die ausgebildet ist, die Lichtquelle zu steuern, um ein Triggersignal zu erzeugen und auszugeben, wobei das Triggersignal ausgebildet ist, den Flammendetektor (200) zu veranlassen, einen Selbsttestvorgang auszuführen, und wobei das Triggersignal ausgebildet ist, eine oder mehrere Eigenschaften einer natürlichen Flamme nicht nachzuahmen.

9. Verwendung einer Testlampe (300) wie definiert in
Anspruch 8, wobei die Testlampe weiter einen Aktuator (306) umfasst, der betriebsfähig an die Steuereinheit gekoppelt ist, wobei der Aktuator ausgebildet ist, das Erzeugen und Ausgeben des Triggersignals zu initiieren.

10. Verwendung einer Testlampe (300) wie definiert in einem der Ansprüche 8-9, wobei das Triggersignal mindestens eines von einem codierten Signal, einem Signal, das bei einer vorbestimmten Wellenlänge übertragen wird, und einem gepulsten Signal ist.

11. Verfahren zum Testen eines Flammendetektors (200) nach einem der Ansprüche 1 bis 7, wobei das Verfahren umfasst:
ein codiertes Triggersignal von einer Testlampe (300) an einem Trigger-Sensor (212) des Flammendetektors zu empfangen;
einen Selbsttestvorgang des Flammendetektors als Reaktion auf die Detektion des codierten Triggersignals auszuführen
wobei der Selbsttestvorgang umfasst:
Licht einer vorbestimmten Wellenlänge aus dem Inneren des Flammendetektors in Richtung auf einen Reflektor auszustrahlen; und
Licht der vorbestimmten Wellenlänge, das von dem Reflektor reflektiert wird, an einem Flammendetektionssensor des Flammendetektors zu detektieren.

12. Verfahren nach Anspruch 11, das weiter das Erzeugen eines Indikators bezüglich eines Status des Selbsttestvorgangs umfasst.

13. Verfahren nach Anspruch 11 oder 12, wobei der Indikator ein Licht (106) an dem Flammendetektor umfasst.

14. Verfahren nach einem der Ansprüche 11 bis 13, weiter umfassend:
das Triggersignal von einer Testlampe (300) auszusenden und das Triggersignal in Richtung auf den Flammendetektor zu richten.

15. Verfahren nach einem der Ansprüche 11 bis 14, wobei der Trigger-Sensor ein Sichtfeld und eine Empfindlichkeit aufweist, die mit einem Sichtfeld und einer Empfindlichkeit des mindestens einen Flammendetektionssensors gleich sind.

## Revendications

1. Détecteur de flamme (200), comprenant :
un corps (202) ;
une face avant (208) montée sur le corps ;
au moins un capteur de flamme agencé dans le corps, avec chaque capteur de flamme de l'au moins un capteur de flamme étant agencé derrière une fenêtre optique (204) respective dans la face avant ;
un capteur de déclenchement (212) dans le corps configuré pour détecter un signal de déclenchement reçu d'une source externe, dans lequel le capteur de déclenchement présente un champ de vision et une sensibilité qui sont les mêmes qu'un champ de vision et une sensibilité de l'au moins un capteur de flamme ; et
un dispositif de commande fonctionnellement relié au capteur de déclenchement, dans lequel le dispositif de commande est configuré pour effectuer une opération d'autotest du détecteur de flamme lorsqu'un signal de déclenchement est reçu au niveau du capteur de déclenchement ;
**caractérisé en ce que**
l'au moins un capteur de flamme est configuré en tant qu'ensemble de capteurs à infrarouge moyen à spectres multiples (MSMIR) ; et
un réflecteur (110a-c) est agencé sur la face avant pour chaque capteur de flamme de l'au moins un capteur de flamme, dans lequel chaque réflecteur est agencé de manière à réfléchir une lumière reçue d'un émetteur agencé dans le corps et à diriger la lumière reçue vers un capteur de flamme respectif de l'au moins un capteur de flamme ;
dans lequel le dispositif de commande est configuré pour amener le détecteur de flamme à :
recevoir, au niveau d'un capteur de déclenchement (212) du détecteur de flamme, un signal de déclenchement codé provenant d'une lampe d'essai (300) ;
effectuer une opération d'autotest du détecteur de flamme en réponse à une détection du signal de déclenchement codé ;
dans lequel l'opération d'autotest comprend : l'émission d'une lumière d'une longueur d'onde prédéterminée depuis l'intérieur du détecteur de flamme vers un réflecteur ; et
la détection d'une lumière de la longueur d'onde prédéterminée réfléchie par le réflecteur au niveau d'un capteur de flamme du détecteur de flamme.

2. Détecteur de flamme (200) selon la revendication 1, dans lequel l'ensemble de capteurs à infrarouge moyen à spectres multiples (MSMIR) comprend au moins trois capteurs de flamme.

3. Détecteur de flamme (200) selon une quelconque revendication précédente, dans lequel l'au moins un capteur de flamme est configuré pour détecter des longueurs d'onde de lumière indicatives d'une flamme naturelle.

4. Détecteur de flamme (200) selon une quelconque revendication précédente, comprenant en outre un voyant lumineux agencé sur la face avant (208) et configuré pour générer une indication d'un état du détecteur de flamme.

5. Détecteur de flamme (200) selon une quelconque revendication précédente, dans lequel l'au moins un capteur de flamme comprend un détecteur de flamme à capteurs multiples.

6. Détecteur de flamme (200) selon une quelconque revendication précédente, dans lequel l'au moins un capteur de flamme comprend un capteur ultraviolet.

7. Détecteur de flamme (200) selon l'une quelconque des revendications 1 à 5, dans lequel l'au moins un capteur de flamme comprend un capteur ultraviolet/infrarouge.

8. Utilisation d'une lampe d'essai (300) pour tester un détecteur de flamme (200) selon l'une quelconque des revendications 1 à 7, la lampe d'essai comprenant :
un boîtier (308) ;
une source lumineuse (302) configurée pour émettre de la lumière ; et
un dispositif de commande (304) configuré pour commander la source lumineuse pour générer et délivrer en sortie un signal de déclenchement, dans laquelle le signal de déclenchement est configuré pour amener le détecteur de flamme (200) à effectuer une opération d'autotest et dans laquelle le signal de déclenchement est configuré pour ne pas imiter une ou plusieurs propriétés d'une flamme naturelle.

9. Utilisation d'une lampe d'essai (300) telle que définie dans la revendication 8, la lampe d'essai comprenant en outre un actionneur (306), couplé fonctionnellement au dispositif de commande, dans laquelle l'actionneur est configuré pour initier la génération et délivrer en sortie le signal de déclenchement.

10. Utilisation d'une lampe d'essai (300) telle que définie dans l'une quelconque des revendications 8 à 9, dans laquelle le signal de déclenchement est au moins un signal parmi un signal codé, un signal transmis à une longueur d'onde prédéterminée, et un signal pulsé.

11. Procédé pour tester un détecteur de flamme (200) selon l'une quelconque des revendications 1 à 7, le procédé comprenant :
la réception, au niveau d'un capteur de déclenchement (212) du détecteur de flamme, d'un signal de déclenchement codé provenant d'une lampe d'essai (300) ;
le fait d'effectuer une opération d'autotest du détecteur de flamme en réponse à une détection du signal de déclenchement codé
dans lequel l'opération d'autotest comprend :
l'émission d'une lumière d'une longueur d'onde prédéterminée depuis l'intérieur du détecteur de flamme vers un réflecteur ; et
la détection d'une lumière de la longueur d'onde prédéterminée réfléchie par le réflecteur au niveau d'un capteur de flamme du détecteur de flamme.

12. Procédé selon la revendication 11, comprenant en outre une génération d'un indicateur concernant un état de l'opération d'autotest.

13. Procédé selon la revendication 11 ou la revendication 12, dans lequel l'indicateur comprend une lumière (106) sur le détecteur de flamme.

14. Procédé selon l'une quelconque des revendications 11 à 13, comprenant en outre :
l'émission du signal de déclenchement depuis une lampe d'essai (300) et la direction dudit signal de déclenchement vers le détecteur de flamme.

15. Procédé selon l'une quelconque des revendications 11 à 14, dans lequel le capteur de déclenchement présente un champ de vision et une sensibilité qui sont les mêmes qu'un champ de vision et une sensibilité de l'au moins un capteur de flamme.
